Europäisches Patentamt

European Patent Office

Office européen des brevets

(19)

(11)  EP 0 619 528 B1

(12)  EUROPEAN PATENT SPECIFICATION

(45) Date of publication and mention
of the grant of the patent:
**22.10.1997  Bulletin 1997/43**

(51) Int Cl.6: **G03G 15/00**, H04N 1/04,
G06K 15/12

(21) Application number: **93118836.1**

(22) Date of filing: **23.11.1993**

(54) **Laser scanner imaging belt encoding system in electrostatographic printing**

Kodierungssystem für ein Abbildungsband eines Laserabtasters im elektrostatisch-grapischen Drucken

Système de codage pour une bande de formation d'image par balayage laser en impression électrostatographique

(84) Designated Contracting States:
**DE FR GB IT**

(30) Priority: **07.04.1993  US 44121**

(43) Date of publication of application:
**12.10.1994  Bulletin 1994/41**

(73) Proprietor: **Hewlett-Packard Company
Palo Alto, California 94304 (US)**

(72) Inventors:
• **Luque, Phillip R.
Boise, Idaho 83704 (US)**
• **Jeran, Paul L.
Boise, Idaho 83704 (US)**
• **Foote,Wayne E.
Eagle, Idaho 83616 (US)**

(74) Representative: **Schoppe, Fritz, Dipl.-Ing.
Patentanwalt,
P.O. Box 71 08 67
81458 München (DE)**

(56) References cited:
EP-A- 0 437 204          EP-A- 0 494 105
JP-A- 4 335 665

• PATENT ABSTRACTS OF JAPAN, vol. 16, no.
500 (P-1437) 15 October 1992 & JP-A-04 181 276
• PATENT ABSTRACTS OF JAPAN, vol. 16, no.
175 (P-1344) 27 April 1992 & JP-A-04 016 979
• PATENT ABSTRACTS OF JAPAN, vol. 17, no.
182 (P-1518) 8 April 1993 & JP-A-04 335 665
• PATENT ABSTRACTS OF JAPAN, vol. 17, no.
153 (P-1510) 25 March 1993 & JP-A-04 321 066
• PATENT ABSTRACTS OF JAPAN, vol. 7, no. 93
(P-192) 19 April 1983 & JP-A-58 018 640
• PATENT ABSTRACTS OF JAPAN, vol. 17, no.
118 (P-1500) 11 March 1993 & JP-A-04 303 859
• PATENT ABSTRACTS OF JAPAN, vol. 13, no.
353 (P-913) 8 August 1989 & JP-A-01 112 266
• PATENT ABSTRACTS OF JAPAN, vol. 16, no.
260 (P-1369) 12 June 1992 & JP-A-04 063 389
• PATENT ABSTRACTS OF JAPAN, vol. 15, no.
422 (M-1173) 25 October 1991 & JP-A-03 177 243
• PATENT ABSTRACTS OF JAPAN, vol. 15, no.
422 (M-1173) 25 October 1991 & JP-A-03 177 221
• PATENT ABSTRACTS OF JAPAN vol. 016, no.
382 (P-1403) 14 August 1992 & JP-A-04 122 974
(SHARP CORP) 23 April 1992
• PATENT ABSTRACTS OF JAPAN vol. 010, no.
223 (P-483) 5 August 1986 & JP-A-61 057 947
(RICOH CO LTD) 25 March 1986

## Description

### FIELD OF THE INVENTION

The present invention relates to the use of imaging belts for printers, photocopiers and the like, and more particularly, to controlling the precise positioning of images on imaging belts in machines using electrostatographic printing processes.

### BACKGROUND OF THE INVENTION

Printers and photocopiers producing black and white images need to create and transfer one image to the paper. A number of mechanisms are used to achieve this transfer in a satisfactory manner. Complex images, such as color images, require that multiple images be placed sequentially one atop another to create the desired final image to be transferred to the paper. These multiple, sequential images must be placed with precise control to avoid degrading of the final image.

Existing printers and photocopiers using electrostatographic printing processes to create images, such as laser printers, typically use a drum with photoconductive material on its outer surface. The drum is scanned by a laser beam writing image data to create the desired image on the drum that, in turn, is transferred to paper. Drums are quite useful for this purpose because effectively they are rigid bodies and their lateral and circumferential position can be controlled quite accurately. Using drums in combination with laser scanner units produce precisely positioned, high-definition images.

Two different types of drums are used in the electrostatographic printing process. Many existing machines use a drum with a circumference shorter than the length of the paper to which the image is to be transferred. To transfer the complete image to the paper, the drum must rotate several times, transferring one portion of the image to the paper on each rotation, and then being scanned again to create the next portion of the image.

The use of software techniques to "smooth" the intersections between the adjoining portions of the image can produce a high-definition, black and white image using the small circumference drum. The small drum cannot produce a high-definition color or other complex image, because "smoothing" techniques are insufficient to print high-definition multiple, sequential images accurately.

The second type of drum used in electrostatographic printing has a circumference equal to or longer than the length of the paper to which the image is to be transferred. With the large drum, only one rotation is needed to create and transfer an image to paper. The precision with which the large drum position can be controlled and its ability to transfer an image in one rotation make the large drum potentially useful in the multiple, sequential image printing process.

There are several problems with the large circumference drum, however, that limit its usefulness for printers and copiers. The size of the large drum severely limits the size and physical layout of the printing unit as a whole and significantly increases the cost of the large drum. This is important with the emphasis on making equipment as compact as possible. Also, increased cost is significant especially in those machines which replace the drum on a regular basis to maintain print quality.

Imaging belts using photoconductive material have been used in the electrostatographic printing process for some machines. Imaging belts have advantages over large drums. They can have the circumference of a large drum while allowing greater flexibility in both the size and configuration of the printing unit. Also, imaging belts are less expensive than drums.

Imaging belts do present a problem in multiple, sequential image printing. The belt position is difficult to precisely control, both laterally and circumferentially. An imaging belt tends to "walk" laterally on the rollers which suspend and drive it. Circumferentially, an imaging belt can slip on the rollers that support and drive it. Also, imaging belts can stretch.

If precise positioning of images on an imaging belt could be achieved, an imaging belt would provide an efficient, cost effective, and flexible mechanism for the creation of color and other complex images, in devices using electrostatographic printing. The present invention is directed to the solution of this problem.

JP-A-04 335 665 discloses a printer comprising a photosensitive belt on which a triangular mark is provided. A mark sensor detects the mark by a laser beam. The lateral positioning of the image is corrected by adjusting the rotational phase deviation of a rotary polygon mirror of a laser scanner.

EP-A-0 494 105 relates to an apparatus for transverse image registration on a photoreceptive belt. In the apparatus targets corresponding in location to the image areas to be exposed are used for detection of lateral belt displacement and to control transverse location of the exposure scan.

It is the object of the invention to provide a control system for precisely positioning the image relative to the imaging belt.

This object is achieved by a control system according to claim 1 and 2.

### DESCRIPTION OF THE DRAWINGS

FIG. 1 is a perspective view of a preferred embodiment constructed in accordance with the present invention.

FIG.'s 2A-2B depict two traces representing output signals at different points of the circuits for a preferred embodiment.

FIG. 3 is a partial top plan view of an alternative preferred embodiment constructed in accordance with the present invention.

FIG. 4 is an enlarged partial top plan view of an alternative preferred embodiment depicting laser beam scans across an imaging belt.

FIG. 5 depicts four traces representing output signals resulting from the four laser beam scans illustrated in FIG. 4.

FIG. 6A is a block diagram representing signal processing and laser scanner unit control for an alternative preferred embodiment.

FIG. 6B is a block diagram representing imaging belt circumferential control for an alternative preferred embodiment.

FIG. 7 is a partial top plan view of a second alternative preferred embodiment constructed in accordance with the present invention.

FIG. 8A is a partial block diagram representing signal processing for a second alternative preferred embodiment.

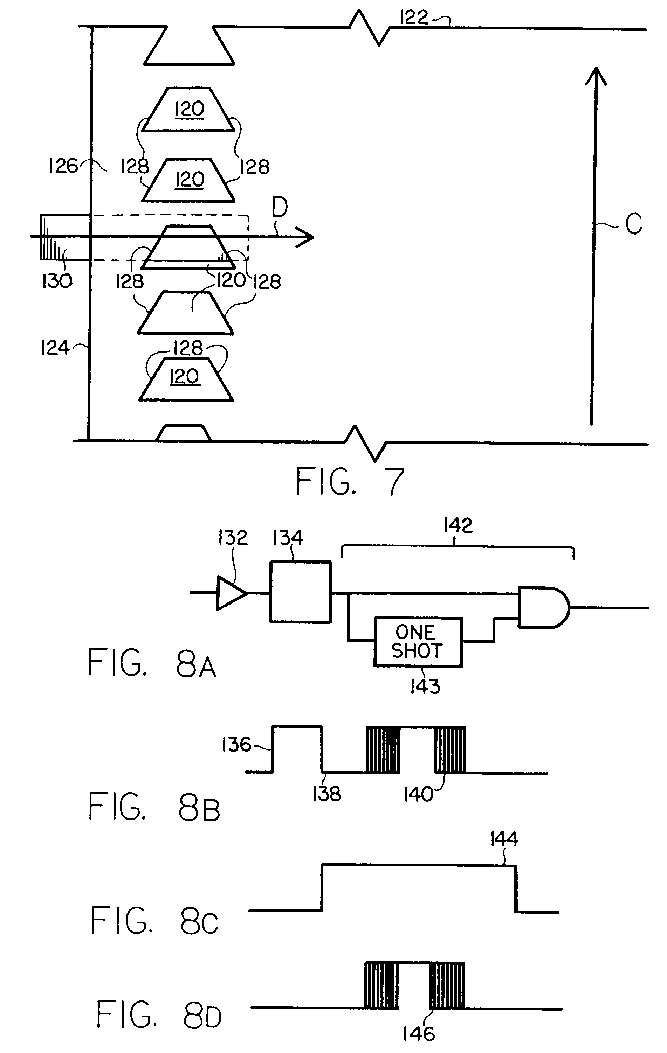

FIG.'s 8B-8D depict three traces representing output signals at different points of the circuit represented in FIG. 8A.

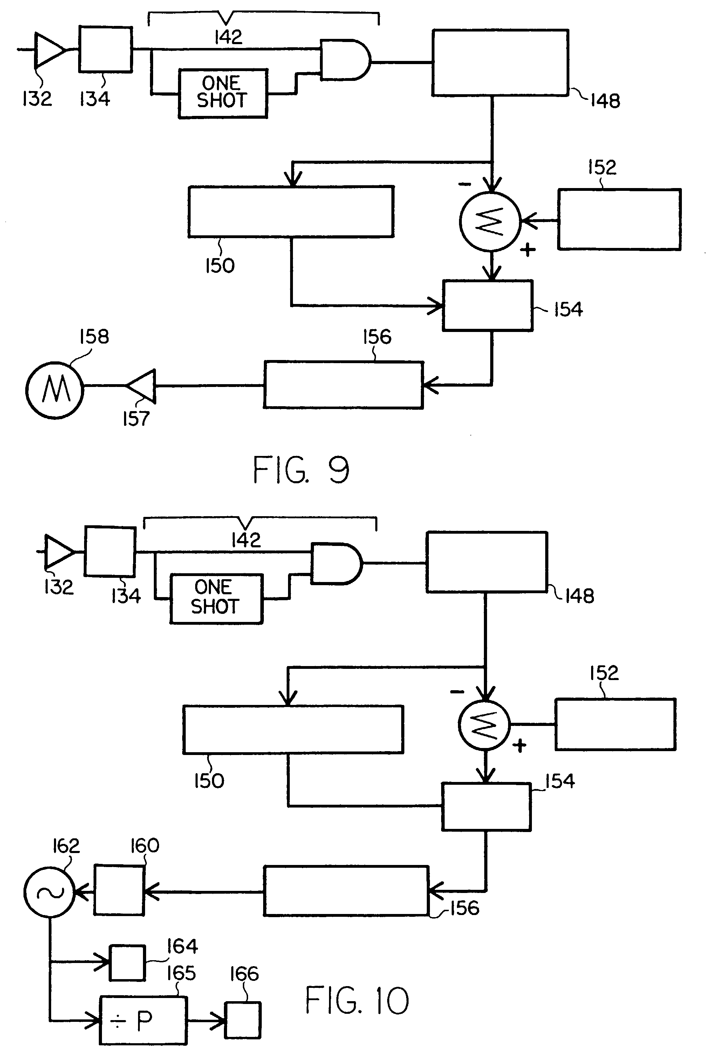

FIG. 9 is a block diagram representing signal processing and imaging belt control for a second alternative preferred embodiment.

FIG. 10 is a block diagram representing signal processing and laser scanner unit control for a second alternative preferred embodiment.

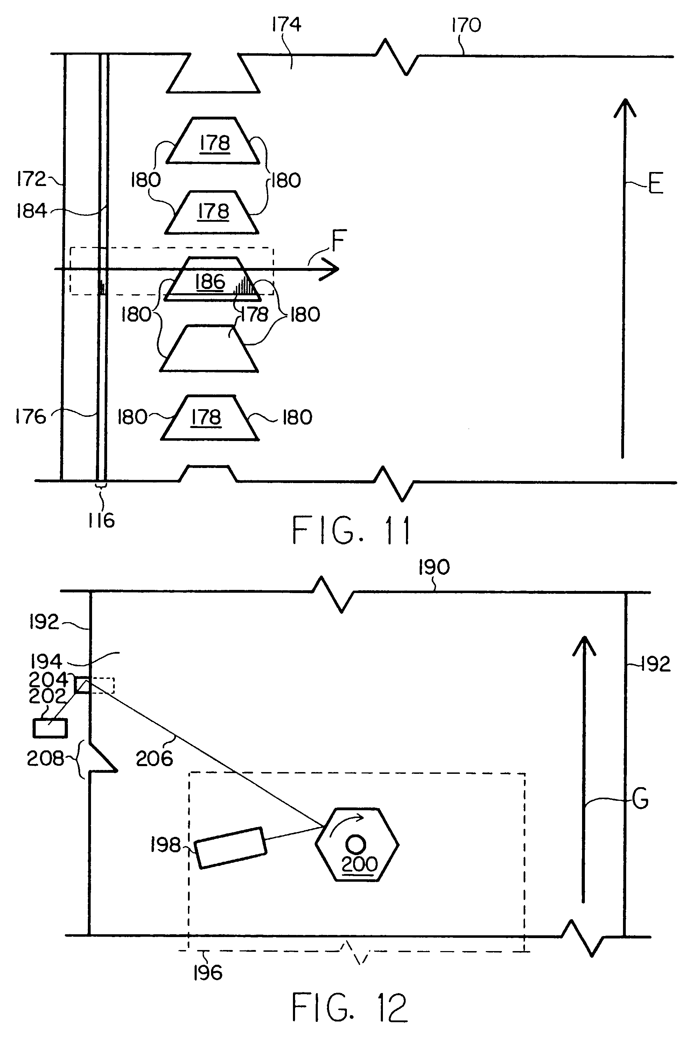

FIG. 11 is a partial top plan view of a third alternative preferred embodiment constructed in accordance with the present invention.

FIG. 12 is a partial top plan view of a fourth alternative preferred embodiment constructed in accordance with the present invention.

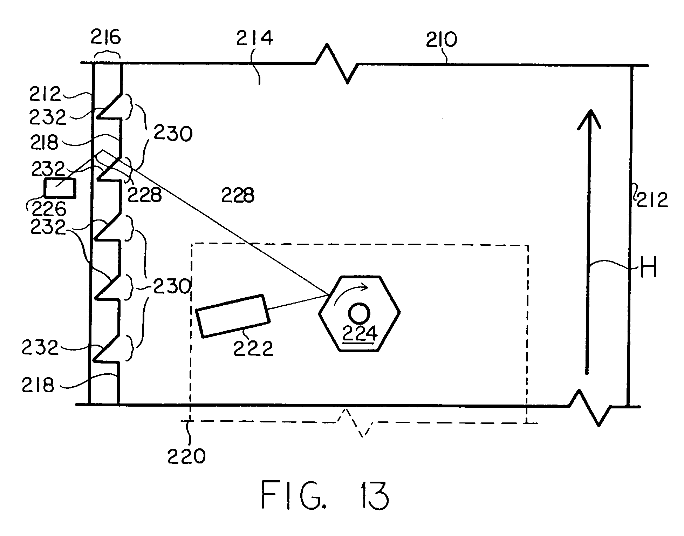

FIG. 13 is a partial top plan view of a fifth alternative preferred embodiment constructed in accordance with the present invention.

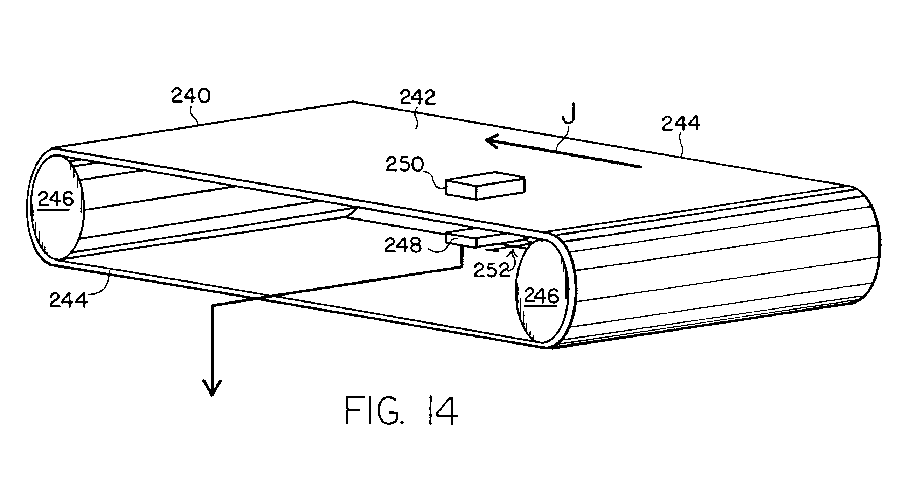

FIG. 14 is a partial perspective view of a sixth alternative preferred embodiment constructed in accordance with the present invention.

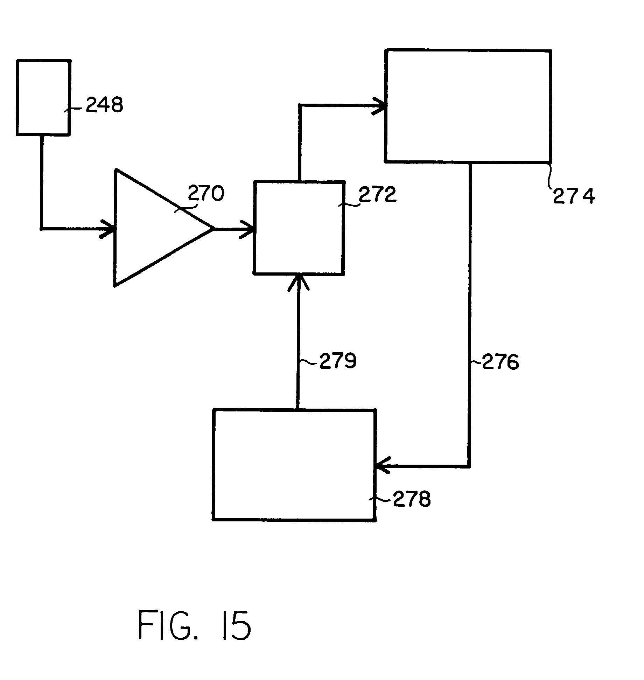

FIG. 15 is a block diagram of a sixth alternative preferred embodiment constructed in accordance with the present invention.

DETAILED DESCRIPTION OF THE INVENTION

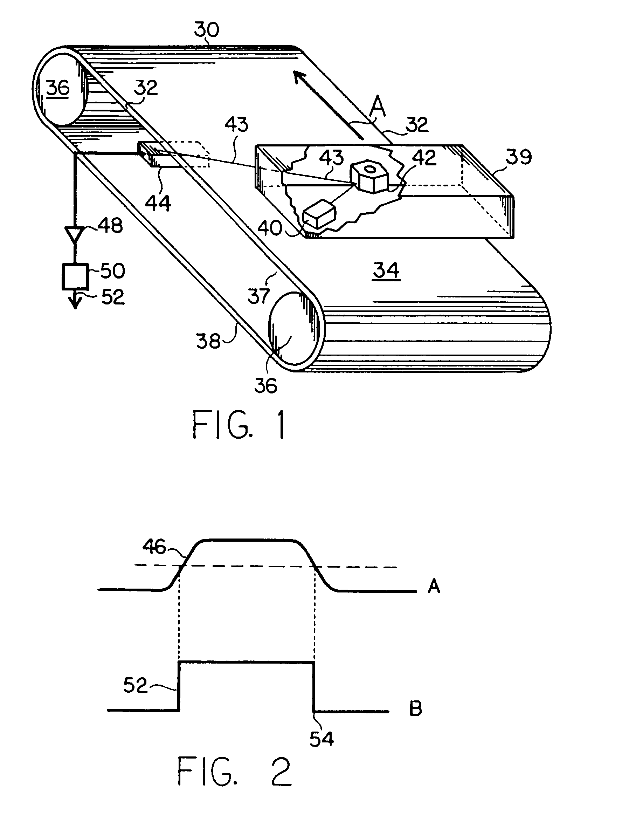

With reference to FIG. 1, an imaging belt 30 with substantially parallel edges 32 and a substantially flat surface 34 is shown. The imaging belt is suspended on and propelled by rollers 36 in the direction indicated by arrow A. The imaging belt forms a closed loop along its edges around the rollers with upper 37 and lower 38 levels. A circumference is measured around the closed loop parallel to the imaging belt edges. At least one of the rollers is driven by a motor (not shown) with a drive (not shown) and a position control (not shown).

The surface of the imaging belt is covered with a photoconductive material. Several photoconductive materials are well known to those skilled in the art. Organic photoconductor has been used successfully for the present invention. The imaging belt can be constructed from several different materials or combination of materials. Vapor coated aluminum on Mylar has proved satisfactory.

This configuration for the imaging belt with the rollers creating upper and lower levels is used in all of the embodiments described herein. The figures illustrating those embodiments that use a partial view of an imaging belt show the upper level of the imaging belt.

Located above the imaging belt 30 is the laser scanner unit 39. Contained within the laser scanner unit is a laser 40 and a rotating faceted mirror 42 which driven by a motor (not shown). In operation, a laser beam 43 strikes the rotating faceted mirror and is projected toward the imaging belt surface 34. The laser beam carries image data. The laser beam is turned on so that it begins to scan before an imaging belt edge 32 is reached. The laser beam strikes a photodetector 44 that is located beneath the imaging belt upper level 37, but extends partially beyond the imaging belt edge.

When the laser beam 43 strikes the photodetector 44, a signal 46 is generated until the beam passes the imaging belt edge, as shown in FIG. 2A. The signal from the photodetector passes through an edge detect circuit with an amplifier 48 and a threshold detector 50 to generate a logic signal 52, shown in FIG. 2B. The laser beam scan over the imaging belt edge 32 is shown by an edge signal 54 in the logic signal which is used to initiate the transfer of image data to the laser 40 and, in turn, to the imaging belt surface 34 via the laser beam. On the next scan by the laser beam, the process is repeated so that the lateral position of the imaging belt edge is precisely determined for each transfer of image data to the imaging belt surface.

Photodetectors and the components to process their signals are well known. A reversed biased Siemens BPX-90 photodiode with a 100 ohm load and a NE592 video amplifier have proven satisfactory for this use. The light source discussed in this and the other embodiments is a laser in a laser scanner unit but the embodiments herein also would work with other light sources, such as a light emitting diode array across the imaging belt surface.

This embodiment allows the precise lateral placement of image data on the imaging belt surface 34 by tying the transfer of the image data to the determination of the precise position of the imaging belt edge 32. Since this process is repeated for each scan, each line of image data will track the imaging belt edge which eliminates concerns regarding lateral displacement of the imaging belt 30. This precise lateral placement of image data greatly increases the usefulness of imaging belts for electrostatographic printing involving the creation of color and other complex images using multiple, sequential images.

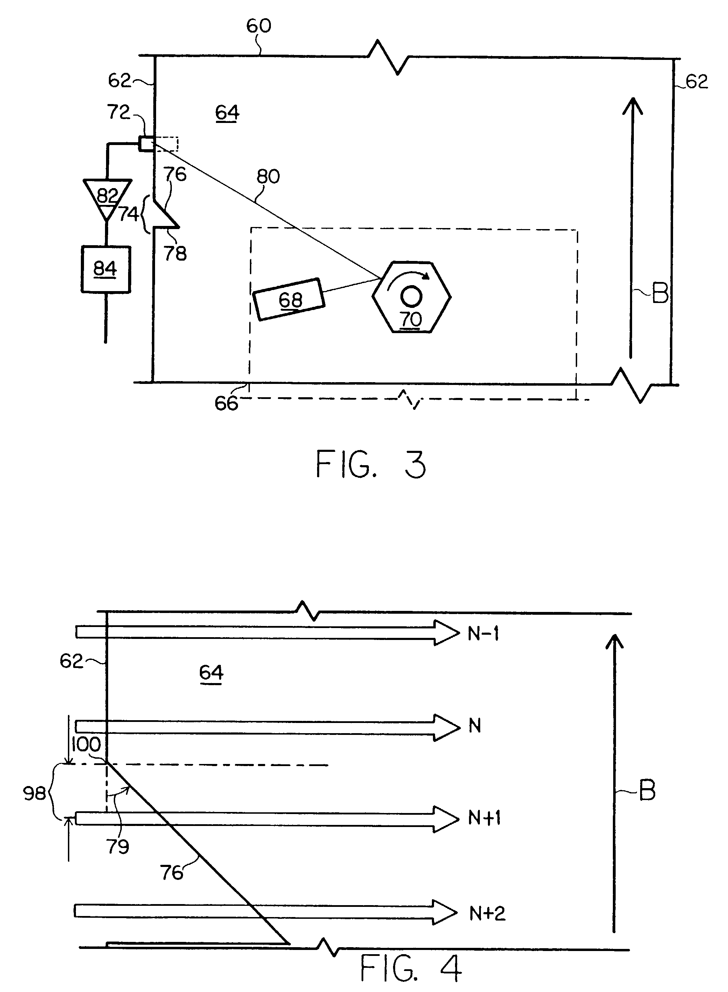

An alternative preferred embodiment is shown in FIG. 3. This embodiment incorporates an imaging belt 60 with an upper level shown, two edges 62 and a surface 64 covered with a photoconductor, a laser scanner unit 66 with a laser 68 and a rotating faceted mirror 70, and a photodetector 72 in the same configuration described in the above embodiment. The imaging belt in this embodiment also forms a closed loop along its edges and is suspended on rollers (not shown) in the closed loop. A circumference is measured around the closed loop parallel to the edges. There is a window 74 with a slanted edge 76 and a flat edge 78. The slanted edge forms an oblique angle theta 79 relative to the imaging belt edge. The window is located proximate the imaging belt edge so that it passes over the photodetector as the imaging belt moves in the direction of arrow B.

As the laser 68 projects a laser beam 80 against the rotating faceted mirror 70 to the imaging belt surface 64 where the window 74 is not located, the lateral position of the imaging belt edge 62 is determined and used to place image data on the imaging belt surface in the desired lateral position in the manner already described.

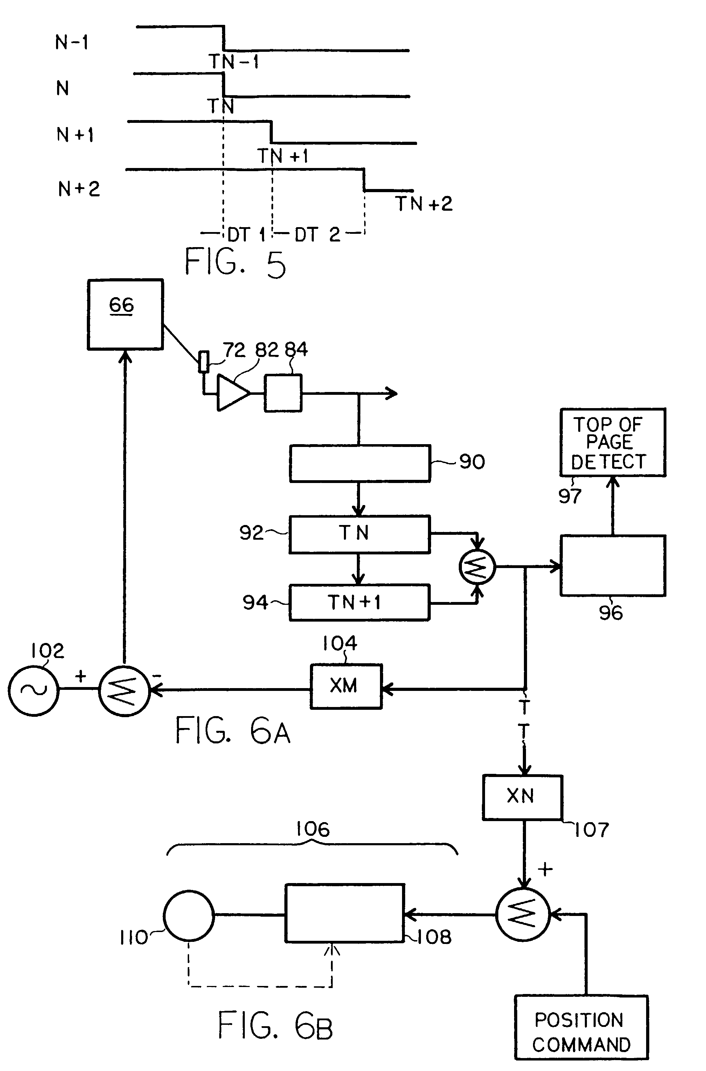

As the imaging belt 60 continues to move, the window 74 is scanned by the laser beam 80 as the window passes over the photodetector 72. The window slanted edge 76 exposes more of the photodetector with each scan of the window. Each successive period between edge signals is longer due to the increasing delay in the occurrence of the edge signals. A representation of these scans is shown in FIG. 4 with scans N-1, N, N+1, and N+2. The corresponding signals for these scans from the photodetector after being processed by an amplifier 82 and threshold detector 84 of the edge detect circuit are illustrated in FIG. 5. The edge signals for the scans are labelled TN-1, TN, TN + 1, and TN + 2.

As shown by the block diagram in FIG. 6A, the output of threshold detector 84 is input to a counter 90 that measures the period between edge signals. Count TN from the counter is transferred to a first register 92. On the next period between edge signals, a new count TN is transferred to the first register and the count in the first register is transferred to a second register 94 and becomes count TN + 1. Count TN + 1 is subtracted from count TN to determine the DT1, i.e. the time difference between the periods. The DT1 value then is input to a threshold detector 96. If the portion of the imaging belt 60 without the window 74 is being scanned, the DT1 value will not exceed the threshold level of the threshold detector. If the scan of the window has begun, the DT1 value will exceed the threshold level of the threshold detector, triggering a TOP OF PAGE DETECT signal 97 to initiate the transfer of an image to the laser scanner unit 66.

At the same time that the transfer of an image is being initiated, the circumferential displacement 98, or OFFSET, of the imaging belt 60 relative to a fixed reference position 100 on the imaging belt is determined. The reference point is the top of the window 74. Using DT1, the value of angle theta 79, and Vspot, i.e. the velocity of the laser beam 80 moving across the imaging belt surface 64, the value of OFFSET is given by:

$$OFFSET = \frac{Vspot * DT1}{TAN(theta)} \qquad (1)$$

Once the circumferential displacement, OFFSET, has been determined, it can be used to adjust the circumferential position of image data relative to the imaging belt surface 64 to precisely place the image data in the desired position. The scanner motor (not shown) which drives the rotating faceted mirror 70 in the laser scanner unit 66 is phase-locked to a clock 102, Fscan. The desired circumferential positioning of image data on the imaging belt surface can be obtained by subtracting cycles from the Fscan clock to adjust the transfer and precise placement of the image data. The number of cycles subtracted is calculated using OFFSET, the circumferential displacement 98, in the following equation:

$$Subtracted\ cycles = M * OFFSET \qquad (2)$$

where

$$M = dpi * k \qquad (3)$$

with dpi = printer resolution in dots/inch
and k = Fscan/scan rate
The number of cycles is determined in subtracted cycles stage 104. Those cycles are subtracted from the Fscan clock, thereby adjusting it and the scanner motor to allow the precise circumferential placement of image data on the imaging belt surface. The circuitry and components that receive the edge signals from the threshold detector and process them to generate adjustments for the laser scanner unit constitute a laser adjust circuit.

An alternative approach to obtain the desired circumferential positioning of image data on the imaging belt surface 64 is to adjust the image belt circumferential position using the imaging belt circumferential (or vertical) control system 106, shown in FIG. 6B. The OFFSET, circumferential displacement 98, is calculated as is done above for adjusting laser scan timing. The block diagram are identical to point T. Instead of calculating subtracted cycles, the OFFSET value is used to calculate counts to be added to the imaging belt circumferential (vertical) control system. The number of added counts is calculated by:

$$Added\ counts = N * OFFSET \qquad (4)$$

where N = resolution-belt vertical positioning control system in counts/inch
After the number of added counts is calculated at an added counts stage 107, it is transferred to a position control 108 and the imaging belt motor 110 is adjusted accordingly. The circuitry and components that receive the edge signals from the threshold detector and process them to generate adjustments for the motor position control constitute a motor adjust circuit.

Whether the scan of the laser beam 80 or the circumferential position of the imaging belt 60 is adjusted, these embodiments allow the precise positioning of image data on the imaging belt surface 64, laterally and circumferentially. This precise positioning is achieved by taking advantage of the existing control systems already present in the printing mechanism. No active mechanical control systems are added which increases the reliability and decreases design and manufacturing cost of any printing mechanism using the present invention. The components and electronic circuitry used are well known and readily utilized by those skilled in the art of electrostatographic printing once the principles of the present invention as embodied in these examples are understood.

With the precise lateral and circumferential positioning of image data relative to the imaging belt surface, the imaging belt becomes a superior alternative for machines using electrostatographic printing, especially when creating color and other complex images, requiring precise positioning of multiple, sequential images one on another.

The window 74 used in the above embodiments is a triangular notch cut from the imaging belt edge 62. This is but one possible configuration for windows in the present invention, as is illustrated in embodiments discussed below. A window can be cut from the imaging belt or be a transparent area in the imaging belt. Windows can take a number of shapes as long as there is at least one edge that is slanted relative to a imaging belt edge. One or more windows can be used.

Illustrated in FIG. 7 is a second alternative preferred embodiment using a plurality of windows 120 arrayed at regular intervals around a circumference of an imaging belt 122 with a upper level shown, which has edges 124 and a surface 126. The imaging belt forms a closed loop along its edges. The circumference is measured around the closed loop parallel to the imaging belt edges. The imaging belt motion is indicated by arrow C. The windows are substantially aligned with one another and this alignment is substantially parallel with the imaging belt edge. Each window in this embodiment is trapezoidal in shape with two slanted edges 128.

The overall configuration of this embodiment is virtually identical to the above embodiments with a laser scanner unit (not shown) containing a laser (not shown) and rotating faceted mirror (not shown) located above the imaging belt 122 which suspended on and driven by rollers (not shown). The direction of the laser beam scans is indicated by arrow D. As with the above embodiments, a photodetector 130 is located beneath the upper level of the imaging belt 122 with the part of the photodetector exposed beyond the imaging belt edge 124.

The lateral positioning of image data relative to the imaging belt surface 126 can be accomplished in the manner used in the above embodiments. The imaging belt circumferential position is determined and adjusted from laser beam scans across the windows 120. The output of the photodetector 130 passes through an amplifier 132 and then a threshold detector 134 of an edge detect circuit to produce a logic signal 136 illustrated in FIG. 8B. This signal has a transition that is an edge signal 138 and a second transition that is a window signal 140. A gating circuit 142, illustrated in FIG. 8A, containing a one shot 143, generates a gate 144, shown in FIG. 8C, to isolate the window signal. The gating circuit output, shown in FIG. 8D, is a pulse signal 146, representing the laser scan of a window.

As shown in FIG. 9, the pulse signal 146 is transferred to a hardware counter 148 where the pulse signal period is measured. After the pulse signal period is measured, it is transferred to a comparative stage 150. There the pulse signal period is compared to minimum and maximum values. If it falls between these values, as it will if the laser beam is scanning a window, the pulse signal period is compared to the period of a reference signal generated by a reference sawtooth profile generator 152. The difference between the periods is determined and captured by an error register 154. The value from the error register then is processed by a compensator 156. The resulting signal is sent to a motor drive 157 as an adjustment to control the imaging belt drive motor 158, thus, servoing the imaging belt circumferential position to the laser beam scan. The circuitry and components that receive the logic signals from the threshold detector and process them to generate adjustments for the motor drive constitute a motor drive adjust circuit.

The image data position on the imaging belt surface 126 can be established with this embodiment in the alternative manner, shown in FIG. 10. With this alternative, the pulse signal 146 is isolated and its period determined as described above. The edge signal from the edge detect circuit is used to initiate image data transfer in this embodiment. Also, the pulse signal period comparison to minimum and maximum values, and the capture of the difference between the pulse signal period and the reference signal period by the error register 154 if the pulse signal period falls between the values is identical to the prior embodiment. After the value from the error register is processed by the compensator 156, the compensator signal passes to a digital/analog convertor 160. The signal from the digital/analog convertor controls a voltage controlled oscillator 162 which generates a video data clock 164. When a factor P for adjusting the laser scan is determined and the voltage controlled oscillator output is divided by P in a scan clock stage 165, the voltage controlled oscillator also generates a scan clock 166. P is defined as:

$$P = \frac{dpi * L}{k * e} \qquad (5)$$

where

dpi = printer resolution in dots/inch
L = length of scan line
k = Fscan/scan rate
e = scan efficiency

This embodiment allows additional precision in the positioning of image data relative to the imaging belt surface independent of the imaging belt motion. The circuitry and components that receive the logic signals from the threshold detector and process them to generate adjustments for the voltage controlled oscillator constitute a laser scan adjust circuit.

This embodiment allows the image data circumferential position relative to the imaging belt surface 126 to be continually determined and adjusted as the imaging belt 122 moves. Also, another mechanism for precise lateral positioning of image data relative to the imaging belt surface is provided. This embodiment, like the above embodiments, allows the precise lateral and circumferential positioning of image data relative to the surface of an imaging belt needed to create color and other complex images.

A third alternative preferred embodiment is illustrated in FIG. 11. This embodiment has an imaging belt 170 with an upper level shown, and with two edges 172 and a surface 174 covered with a photoconductor. The imaging belt forms a closed loop along its edges and is suspended on and driven by rollers (not shown). A circumference is measured around the closed loop parallel to the imaging belt edges. The motion of the imaging belt is indicated by arrow E. There is a plurality of windows 178 arrayed around the circumference of the imaging belt. Each window in this embodiment is trapezoidal in shape with two slanted edges 180. The windows are substantially aligned with one another and parallel with the imaging belt edge. Not shown is FIG. 11 are the laser scanner unit with the laser and faceted rotating mirror which are located above the imaging belt 170 as in the above embodiments.

The imaging belt also has a transparent band 176 which extends around the circumference of the imaging belt 170, and is substantially parallel to the imaging belt edge 172 and the windows 178. An inner edge 184 is formed by the intersection of the transparent band and the imaging belt 170.

A photodetector 186 is located under the upper level of the imaging belt 170 so that the transparent band 176 and windows 178 pass over it. As with the above embodiments, a laser beam scans across the imaging belt surface 174. The direction of the scan is indicated by arrow F.

As the laser beam scans across the imaging belt surface 174, the laser beam will hit the photodetector 186 when the beam passes the transparent belt 176. The beam will be cut off when the inner edge 184 is reached, just as it does with the actual imaging belt edge 172. As a result, the inner edge can be used to determine lateral positioning of image data relative to the imaging belt surface instead of the imaging belt edge. The transparent band of this embodiment can be used with any of the embodiments discussed herein. The mechanics and electronics of signal processing and position control virtually are identical to those discussed for the above embodiments. This embodiment allows the present invention to be used in situations when the imaging belt edges may be subject to fraying or other mechanical wear that might effect the determination of the edge position.

This embodiment can be used with any of the window configurations discussed herein for determining circumferential positioning of image data relative to the imaging belt surface 174. Implementation of signal processing and control are the same as described in the above embodiments.

A fourth alternative preferred embodiment has an imaging belt 190 with an upper level shown, and with two edges 192 and a surface 194 covered with a photoconductor, as illustrated in FIG. 12. The motion of the imaging belt is indicated by arrow G. The imaging belt forms a closed loop along its edges and is suspended on and driven by rollers (not shown). A circumference is measured around the closed loop parallel to the imaging belt edges. There is a laser scanner unit 196 with a laser 198 and a rotating faceted mirror 200. A photodetector 202 is used, but not located underneath the imaging belt. A reflecting body 204 with a reflecting surface is located underneath upper level of the imaging belt, but partially exposed beyond the imaging belt edge.

In this embodiment, a laser beam 206 scans the imaging belt surface 194. Unlike other embodiments, the laser beam does not strike the photodetector 202 directly as it begins its scan. Instead, the exposed portion of the reflecting body 204 is hit by the laser beam which then is reflected to the photodetector, which may be located anywhere it can receive a reflected laser beam. When the laser beam passes imaging belt edge 192, the beam does not strike the reflecting body and no beam is reflected to photodetector. Similarly, when a window 208 is scanned, the edge signals are delayed in precisely the same manner described in the above embodiment using a single window configuration.

This embodiment allows even greater flexibility in design of machines using imaging belts with the concepts of the present invention, and can used with any of the window configurations described in the above embodiments. The signal processing and control for the determination of lateral or circumferential positioning of image data relative to the imaging belt surface, are identical to those for the above embodiments.

A fifth alternative preferred embodiment, shown in FIG. 13, has an imaging belt 210 with an upper level shown with two edges 212 and a surface 214 covered with a photoconductor. The imaging belt forms a closed loop along its edges and is suspended on and driven by rollers (not shown). A circumference is measured around the closed loop parallel to the imaging belt edges. Imaging belt motion indicated by arrow H. The imaging belt has a reflecting band 216 extended around the imaging belt circumference, proximate and parallel to one imaging belt edge. The intersection between the reflecting band and imaging belt forms an inner edge 218.

A laser scanner unit 220 with a laser 222 and rotating faceted mirror 224 is located above the imaging belt 210. As in the prior embodiment, this embodiment has a photodetector 226 that is not located underneath the imaging belt. When a laser beam 228 is used to scan the imaging belt 210, the reflecting band will reflect the beam to the photodetector. As with the prior embodiment, the photodetector may be located anywhere it can receive a reflected laser beam. When the laser passes the inner edge 218, the beam will not be reflected to the photodetector. Thus, this embodiment combines attributes of the two prior embodiments by allowing determination of lateral positioning using an inner edge not subject to mechanical wear, and greater design flexibility by using a reflecting band to allow repositioning the photodetector.

While the reflecting band 216 can be combined with any of the window configurations used in the above embodiments to determine circumferential positioning, a different approach is shown in FIG. 13. Instead of windows, a plurality of zones 230 of non-reflecting material are arrayed along and extended over the reflecting band. Each zone has a slanted edge 232 which forms an oblique angle with both the imaging belt edge 212 and inner edge 218. As the laser beam 228 scans across the reflecting band, the zone slanted edges interact with the laser beam in the same manner as the slanted edges of transparent windows in the above embodiments. As a result, the electronic and mechanical implementation of signal processing and control for determination of circumferential positioning of image data relative to the imaging belt surface 214 are virtually identical to those for the above embodiments. The zones can take any number of shapes as long as there is a slanted edge, as with the windows.

A sixth alternative preferred embodiment is illustrated in FIG. 14. As with the above embodiments, an imaging belt 240 with a surface 242 coated with photoconductor and two substantially parallel edges 244 is used. The imaging belt forms a closed loop with upper and lower levels around rollers 246 which support and drive the imaging belt. An imaging belt circumference is measured around the closed loop parallel to the edges. Motion of the imaging belt is indicated by arrow J. A photodetector 248 is located underneath the imaging belt upper level with part of the photodetector extending beyond the imaging belt edge.

Located opposite the photodetector 248 and over the imaging belt 240 is a fixed light source 250. Success has been achieved using a light-emitting diode (LED). The imaging belt and an edge 244 pass between the fixed light source and the photodetector so that part of the fixed light source is obscured by the imaging belt with a portion of the fixed light source extending beyond the imaging belt edge. Light from the fixed light source strikes the photodetector along those portions of the fixed light source and photodetector not obscured by the imaging belt. When it is struck by the light, the photodetector generates a current that is proportional to the amount of light striking it.

As the imaging belt edge 244 moves laterally during the motion of the imaging belt 240, the size of the portions of the fixed light source 250 and the photodetector 248 obscured by the imaging belt change which, in turn, cause the current generated by the photodetector to vary. A reference position for the imaging belt edge and a corresponding reference current are established which allow determination of the precise position of the imaging belt edge, and in turn, initiation of transfer of image data to a laser scanner unit (not shown), using the variations from the reference current in the current generated by the photodetector.

One way to determine the imaging belt lateral position using this embodiment with an edge position circuit is illustrated in FIG. 15. A current I from the photodetector 248 that is directly proportional to the distance 252 the photodetector extends beyond the imaging belt edge is transmitted to a signal conditioning stage 270. At the signal conditioning stage, the photodetector current can be amplified and/or converted to a voltage and used as a control signal for a variable delay circuit 272. The variable delay circuit delays the signal to the data electronics 274 which controls the initiation of image data transfer. The time delay by the variable delay circuit is proportional to the control signal and given by:

$$\text{delta } t = \frac{\text{delta } I}{K * v}$$

where

K =    sensor sensitivity
v =    scan velocity

After the data electronics receive the delayed signal, image data 276 is transferred to the laser scanner unit 278 to enable the writing of the image data to the imaging belt surface 242. The laser scanner unit also outputs a beam detect signal 279 to the variable delay circuit.

As with above embodiments which determine the imaging belt position using laser beam scans, this embodiment ties the transfer of image data to the laser scanner unit to the precise position of the imaging belt edge which is determined continually as the imaging belt moves. This embodiment allows precise lateral positioning of image data and can be used with any of the embodiments which allow precise circumferential positioning of image data.

Regardless of which embodiment or combination of embodiments used, the resulting mechanism provides precise lateral and circumferential positioning of image data relative to an imaging belt surface. Its positioning is sufficiently accurate and repeatable to allow the use of imaging belts to create color and other complex images requiring multiple, sequential images to be laid one upon another precisely in printing machines using the electrostatographic printing. The present invention is equally useful for any application requiring precise positioning of data on moving media.

INDUSTRIAL APPLICABILITY

The mechanisms and techniques for positioning images on imaging belts of this invention have applicability in any device using electrostatographic printing processes. Further, the mechanisms and techniques of the present invention are applicable in any area requiring the precise placement of data on moving media.

**Claims**

1. A control system for controlling the position of an image relative to an imaging belt (30) in a laser scanner having a laser scanner unit (39) for generating a laser beam carrying image data and scanning across a surface of said imaging belt, said control system comprising:

   a photodetector (72);

   at least one window (74) with each said window located in said imaging belt (30) to pass over said photodetector (72) as said imaging belt moves, each said window also being transparent to said laser beam and having at least one slanted edge (76) forming an angle with one imaging belt edge; and

   a position detecting circuit (132 - 156, 157; 132 - 156, 160) connected to said photodetector (72) and arranged for deriving a circumferential position control signal for adjusting the circumferential position of said image relative to said imaging belt (30) from at least two photodetector signals outputted by said photodetector (72) as said laser beam scans multiple raster passes across said window (74), based on the mutual delay of said photodetector signals, said delay being caused by said slanted edge, wherein said position detecting circuit (132 - 156, 157; 132 - 156, 160) is further arranged for deriving a logic signal which is used to initiate the transfer of said image data to said laser scanning unit (39) to thereby adjust the lateral position of said image relative to said imaging belt (30).

2. A control system for controlling the position of an image relative to an imaging belt (210) in a laser scanner having a laser scanner unit (39) for generating a laser beam carrying image data and scanning across a surface of said imaging belt; said control system comprising:

   a reflecting band (216) having at least one slanted edge (232) forming an angle with one imaging belt edge,

   a photodetector (226) being arranged to receive said laser beam reflected from said reflecting band (216) as said imaging belt (210) moves; and

   a position detecting circuit (132 - 156, 157; 132 - 156, 160) connected to said photodetector (226) and arranged for deriving a circumferential position control signal for adjusting the circumferential position of said image relative to said imaging belt (210) from at least two photodetector signals outputted by said photodetector (226) as said laser beam scans multiple raster passes across said slanted edge of said reflecting band (216), based on the mutual delay of said photodetector signals, said delay being caused by said slanted edge, wherein said position detecting circuit (132 - 156, 157; 132 - 156, 160) is further arranged for deriving a logic signal which is used to initiate the transfer of said image data to said laser scanning unit to thereby adjust the lateral position of said image relative to said imaging belt (210).

**Patentansprüche**

1. Ein Steuersystem zum Steuern der Position eines Bilds relativ zu einem Bilderzeugungsriemen (30) in einer Laserabtastvorrichtung mit einer Laserabtasteinheit (39) zum Erzeugen eines Laserstrahls, der Bilddaten trägt, und zum Abtasten über eine Oberfläche des Bilderzeugungsriemens, wobei das Steuersystem folgende Merkmale aufweist:

   einen Photodetektor (72);

   zumindest ein Fenster (74), wobei jedes Fenster in dem Bilderzeugungsriemen (30) angeordnet ist, um über den Photodetektor (72) zu laufen, während sich der Bilderzeugungsriemen bewegt, wobei jedes Fenster ferner für den Laserstrahl transparent ist und zumindest eine schräge Kante (76) aufweist, die einen Winkel mit einem Bilderzeugungsriemenrand bildet; und

eine Positionserfassungsschaltung (132 - 156, 157; 132 - 156, 160), die mit dem Photodetektor (72) verbunden ist und angeordnet ist, um ein Umfangspositions-Steuersignal zum Einstellen der Umfangsposition des Bilds relativ zu dem Bilderzeugungsriemen (30) aus zumindest zwei Photodetektorsignalen, die durch den Photodetektor (72) ausgegeben werden, während der Laserstrahl mehrere Rasterdurchläufe über das Fenster (74) abtastet, basierend auf der gegenseitigen Verzögerung der Photodetektorsignale abzuleiten, wobei die Verzögerung durch die schräge Kante bewirkt wird, wobei die Positionserfassungsschaltung (132 - 156, 157; 132 - 156, 160) ferner angeordnet ist, um ein logisches Signal abzuleiten, das verwendet wird, um die Übertragung der Bilddaten zu der Laserabtasteinheit (39) einzuleiten, um dadurch die laterale Position des Bilds relativ zu dem Bilderzeugungsriemen (30) einzustellen.

2. Ein Steuersystem zum Steuern der Position eines Bilds relativ zu einem Bilderzeugungsriemen (210) in einer Laserabtasteinrichtung mit einer Laserabtasteinheit (39) zum Erzeugen eines Laserstrahls, der Bilddaten trägt, und zum Abtasten über eine Oberfläche des Bilderzeugungsriemens, wobei das Steuersystem folgende Merkmale aufweist:

ein reflektierendes Band (216) mit zumindest einer schrägen Kante (232), die einen Winkel mit einem Bilderzeugungsriemenrand bildet,

einen Photodetektor (226), der angeordnet ist, um den Laserstrahl, der von dem reflektierenden Band (216) reflektiert wird, zu empfangen, während sich der Bilderzeugungsriemen (210) bewegt; und

eine Positionserfassungsschaltung (132 - 156, 157; 132 - 156, 160), die mit dem Photodetektor (226) verbunden ist und angeordnet ist, um ein Umfangspositions-Steuersignal zum Einstellen der Umfangsposition des Bilds relativ zu dem Bilderzeugungsriemen (210) aus zumindest zwei Photodetektorsignalen, die durch den Photodetektor (226) ausgegeben werden, während der Laserstrahl mehrere Rasterdurchläufe über die schräge Kante des reflektierenden Bands (216) abtastet, basierend auf der gegenseitigen Verzögerung der Photodetektorsignale abzuleiten, wobei die Verzögerung durch die schräge Kante bewirkt wird, wobei die Positionserfassungsschaltung (132 - 156, 157; 132 - 156, 160) ferner angeordnet ist, um ein logisches Signal abzuleiten, das verwendet wird, um die Übertragung der Bilddaten zu der Laserabtasteinheit einzuleiten, um dadurch die laterale Position des Bilds relativ zu dem Bilderzeugungsriemen (210) einzustellen.

## Revendications

1. Système de commande pour commander la position d'une image par rapport à une bande de formation d'image (30) dans un dispositif de balayage laser comportant une unité de balayage laser (39), destiné à générer un faisceau laser transportant des données d'image et à effectuer un balayage d'un bout à l'autre d'une surface de ladite bande de formation d'image, ledit système de commande comprenant:

un photodétecteur (72);
au moins une fenêtre (74), chaque dite fenêtre étant située dans ladite bande de formation d'image (30) de manière à passer au-dessus de chaque photodétecteur (72) lorsque ladite bande de formation d'image se déplace, chaque dite fenêtre étant également transparente audit faisceau laser, et ayant au moins un bord incliné (76) faisant un certain angle avec un bord de la bande de formation d'image; et
un circuit de détection de position (132 - 156, 157; 132 - 156, 160) connecté audit photodétecteur (72), et agencé de manière à déterminer un signal de commande de position circonférentielle, destiné à régler la position circonférentielle de ladite image par rapport à ladite bande de formation d'image (30), à partir d'au moins deux signaux de photodétecteur délivrés en sortie par ledit photodétecteur (72), lorsque ledit faisceau laser effectue plusieurs balayages de trame d'un bout à l'autre de ladite fenêtre (74), sur la base du retard mutuel desdits signaux de photodétecteur, ledit retard étant provoqué par ledit bord incliné, dans lequel ledit circuit de détection de position (132 - 156, 157; 132 - 156, 160) est agencé en outre pour déterminer un signal logique utilisé pour initialiser le transfert desdites données d'image vers ladite unité de balayage laser (39), de manière à ainsi régler la position latérale de ladite image par rapport à ladite bande de formation d'image (30).

2. Système de commande pour commander la position d'une image par rapport à une bande de formation d'image (210) dans un dispositif de balayage laser comportant une unité de balayage laser (39), destiné à générer un faisceau laser transportant des données d'image et à effectuer un balayage d'un bout à l'autre d'une surface de ladite bande de formation d'image, ledit système de commande comprenant:

une bande réfléchissante (216), ayant au moins un bord incliné (232), faisant un certain angle avec un bord de la bande de formation d'image,
un photodétecteur (226), agencé de manière à recevoir ledit faisceau laser réfléchi par ladite bande réfléchissante (216), lorsque ladite bande de formation d'image (210) se déplace; et un circuit de détection de position (132 - 156, 157; 132 - 156, 160) connecté audit photodétecteur (226), et agencé de manière à déterminer un signal de commande de position circonférentielle, destiné à régler la position circonférentielle de ladite image par rapport à ladite bande de formation d'image (210), à partir d'au moins deux signaux de photodétecteur délivrés en sortie par ledit photodétecteur (226), lorsque ledit faisceau laser effectue plusieurs balayages de trame d'un bout à l'autre dudit bord incliné de ladite bande réfléchissante (216), sur la base du retard mutuel desdits signaux de photodétecteur, ledit retard étant provoqué par ledit bord incliné, dans lequel ledit circuit de détection de position (132 - 156, 157; 132 - 156, 160) est agencé en outre pour déterminer un signal logique utilisé pour initialiser le transfert desdites données d'image vers ladite unité de balayage laser, de manière à ainsi régler la position latérale de ladite image par rapport à ladite bande de formation d'image (210).

FIG. 1

FIG. 2

FIG. 3

FIG. 4

FIG. 5

FIG. 6A

FIG. 6B

EP 0 619 528 B1

FIG. 7

FIG. 8A

FIG. 8B

FIG. 8C

FIG. 8D

FIG. 9

FIG. 10

FIG. 11

FIG. 12

FIG. 13

FIG. 14

FIG. 15